# EUROPEAN PATENT SPECIFICATION

(11) **EP 0 271 850 B1**
(45) Date of publication and mention of the grant of the patent: **16.06.1993**
(21) Application number: 87118439.6
(22) Date of filing: 12.12.1987
(51) Int. Cl.: H05B 6/66

(54) **Power feeding apparatus**
Leistungslieferungsgerät
Appareil d'alimentation en puissance

(30) Priority: 15.12.1986 JP 298144/86; 15.12.1986 JP 298145/86; 15.12.1986 JP 298146/86
(43) Date of publication of application: 22.06.1988
(73) Proprietor: MATSUSHITA ELECTRIC INDUSTRIAL CO., LTD., Kadoma-shi, Osaka-fu, 571 (JP)
(72) Inventor: Sakamoto, Kazuho, Soraku-gun Kyoto-fu (JP); Shitaya, Takao, Yamatokoriyama-shi Nara-ken (JP); Kusunoki, Shigeru, Yamatokoriyama-shi Nara-ken (JP); Maehara, Naoyoshi, Shiki-gun Nara-ken (JP); Niwa, Takashi, Ikoma-gun Nara-ken (JP); Matsumoto, Takahiro, Ikoma-gun Nara-ken (JP); Bessyo, Daisuke, Yamatokoriyama-shi Nara-ken (JP)
(74) Representative: Eisenführ, Speiser & Partner

(56) References cited:
- EP-A- 0 202 579
- EP-A- 0 205 642
- US-A- 3 319 149
- US-A- 4 027 200
- RESEARCH DISCLOSURE, no. 268, August 1986, no. 26804, page 449, Emsworth, Hampshire, GB; "AC isolated secondary voltage"

## Description

The present invention generally relates to a power feeding apparatus which is used in a high-frequency heater or the like, is further power-converted by a transformer after the power provided by a power supply such as a commercial power supply or the like has been converted into the high-frequency power by a transducer including a semiconductor, and feeds the converted power into the load having the unidirectional electrical current characteristics of a magnetron or the like.

Generally, such a power feeding apparatus is provided in various constructions with the views of smaller size, lighter weight, lower cost, etc. of chiefly the apparatus transformer. A magnetron is a representation in the example of the load having unidirectional electrical current characteristics and requiring comparatively large power. Many improvements are provided, even with respect to such a magnetron and the propositions thereof are provided.

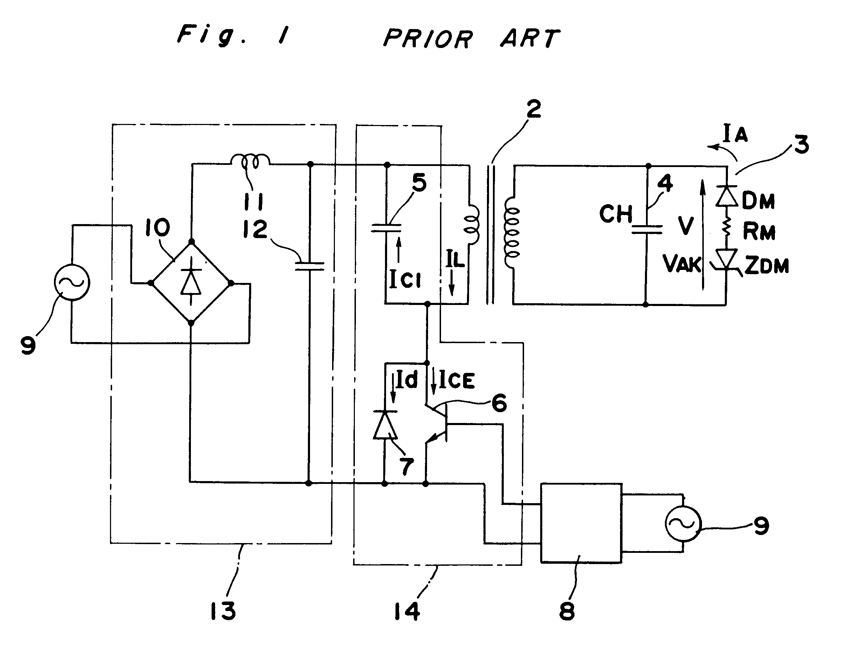

Fig. 1 shows one embodiment of the conventional power feeding apparatus of this type.

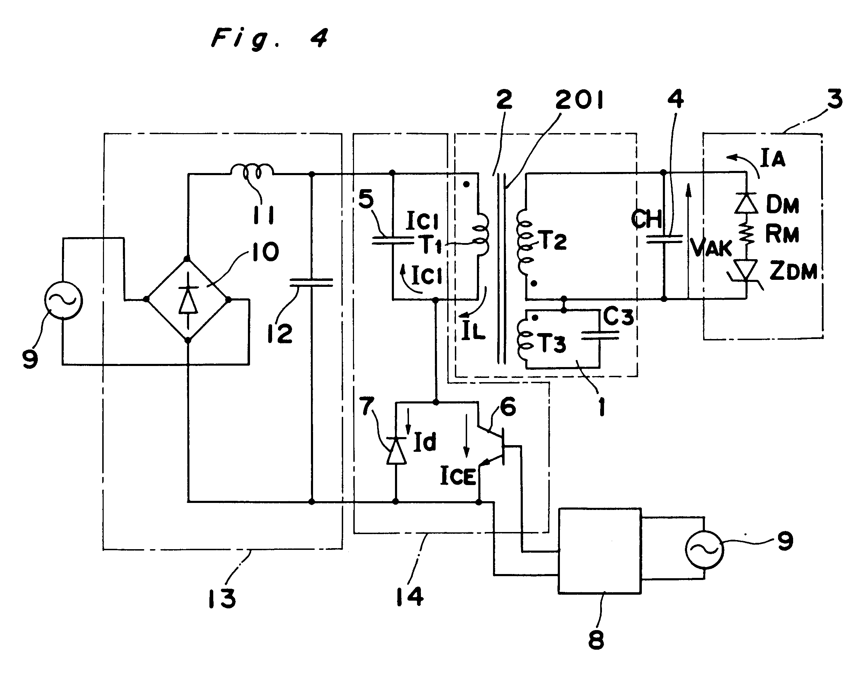

With the construction of Fig. 4, transistor 6 operates with the frequency of approximately 20 KHz through 100 KHz, and the weight and size of the boosting transformer may be made a fraction in size when compared with the boosting transformer with the commercial power-supply frequency being as it is.

The power of a commercial power supply 9 is rectified by a diode bridge 10 to form a unilateral power supply. The commercial power supply 9 and a DC power supply circuit 13 form the power supply of an inverter 14. It is to be noted that a choke coil 11 and a smoothing capacitor 12 play the role of a filter with respect to the high-frequency switching operation of the inverter 14.

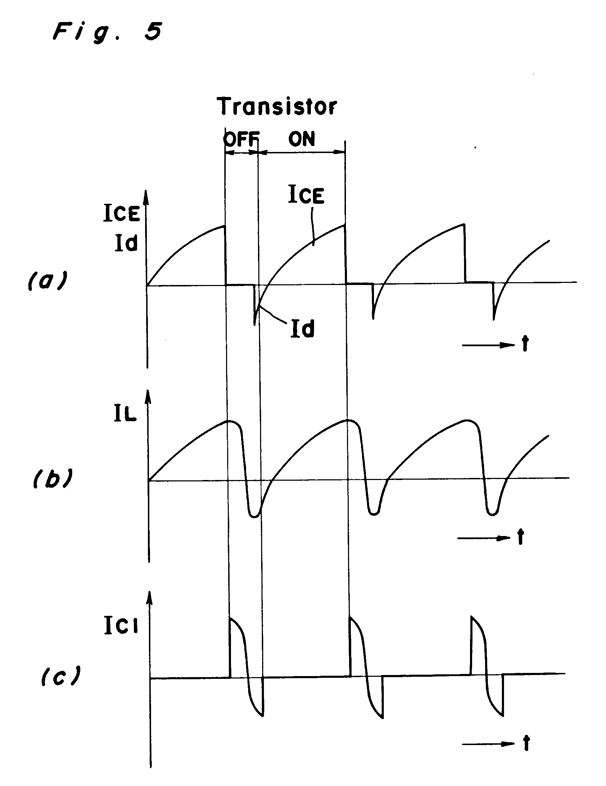

The inverter 14 is composed of a resonance capacitor 5, a transformer 2, the transistor 6, a diode 7 and a driving circuit 8. The transistor 6 effects the switching operation with the given period and duty (on, off time ratio) by the base current to be fed from the driving circuit 8. As a result, a current with such a collector current I_{CE} and a diode Id as shown in Fig. 5(a) as a center flows to the primary winding of the transformer 2. Such a current I_{L} as shown in Fig. 5(b) flows.

A load 3 having a unidirectional electrical current characteristic is connected onto the secondary side of the transformer 2. The power converted by the inverter 14 is to be fed to the load 3. The load 3 is equivalently one like a magnetron represented by a series connector of a diode D_{M}, a resistor R_{M}, and a zener diode Z_{DM}.

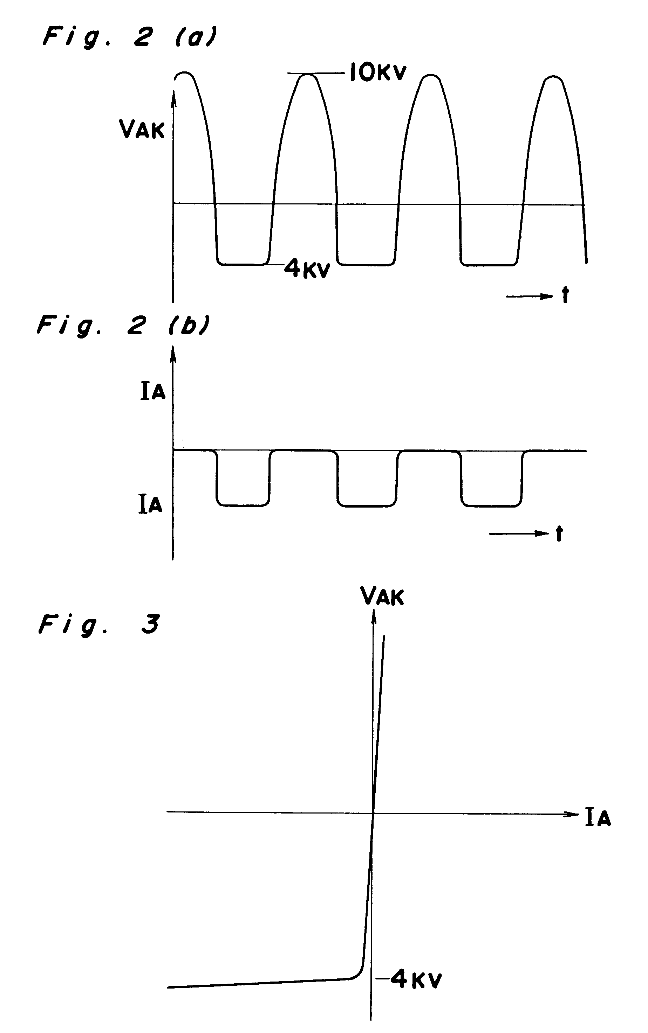

Such a current I_{A} as shown in Fig. 2(b) flows to the load 3. The voltage V_{AK} of the load 3 becomes as shown in Fig. 2(a). This is because the transformer 2 is a leakage type transformer, further a capacitor CH4 which a reverse bias current bypass means is connected in parallel relation to the load. Namely, the load 3 may be replaced by a series circuit of a resistor R_{M}, a diode D_{M}, and a zener diode Z_{DM}. The capacitor CH is connected in parallel to it.

The load 3 is non-linear. The impedance (almost open) becomes very large through the diode D_{M} with respect to the reverse voltage (normal-direction voltage). On the other hand, the impedance becomes large before a certain constant voltage (zener voltage of Z_{DM}) is exceeded with respect to the positive voltage (negative direction voltage). The impedance becomes small when this voltage is exceeded. The magnetron is such a load as described hereinabove. The characteristics are shown in Fig. 3.

In Fig. 2(a), the load conducts when the voltage V_{AK} of the load 3 is -4 KV. If the voltage on the primary side rises because of the low impedance, approximately -4 KV is retained. Also, at this time, the load current IA flows.

When the reverse voltage is applied, the load becomes very high in impedance. Thus, such a voltage as shown in Fig. 2(a) is caused through the connection with the capacitor CH4 for the bypass use of the reverse bias. The voltage is approximately 10 KV. It may be somewhat smaller by the larger capacitor CH4. The charging current into the capacitor CH4 increases correspondingly. The copper loss caused in the winding of the transformer becomes large, with the temperature rise is caused through the heating. In approximately optimum capacitor capacity, the reverse voltage becomes approximately 10 KV.

In such a power feeding apparatus, the voltage V_{AK} of approximately 10 KV is applied, so that the insulation failure of the corona discharge, the arc discharge or the like is caused from between both the terminals of the load 3 to destroy the apparatus. As this voltage is made smaller, it is lowered somewhat by the larger size of the capacitor CH4 for bypass use of the reverse bias. The charging current of the capacitor becomes larger correspondingly. The copper loss of the transformer 2 increases to perform the heating operation so that the transformer fails because of the insulating destruction. It is very difficult to prevent the corona discharge or the arc discharge through the lowered voltage V_{AK} like this.

A similar power feeding apparatus is also disclosed in EP-A-0 202 579. In a further embodiment of this known power feeding apparatus, the transformer comprises a third winding adapted to generate a high frequency low-voltage power which is fed between the cathode terminals of a magnetron through choke coils, while a high frequency high-voltage power generated by the secondary winding is fed between the anode and the cathode of the magnetron. A capacitor is provided between the cathode terminals of the magnetron. As a result, the combination of the third winding and the capacitor is adapted to supply high frequency low-voltage power to the cathode terminals of the magnetron.

US-A-4 027 200 relates to a high voltage generating circuit for supplying a high-voltage to the anode of a cathode ray tube. This known circuit comprises a horizontal signal input terminal to which a horizontal driving signal having a horizontal frequency of 15,75 kHz is applied. The horizontal signal input terminal is connected to the base electrode of a npn-type transistor forming a switching element. The collector electrode of the transistor is grounded i.a. through a resonant capacitor and through a series circuit consisting of a horizontal deflection coil and a DC block capacitor. It is also connected through a primary winding of a fly-back transformer to a power supply terminal to which a positive DC voltage is supplied. The resonance frequency is determined by the inductances of the horizontal deflection coil, the primary winding and the capacitance of the capacitor and is normally about 50 kHz, i.e. higher than the horizontal frequency of 15,75 kHz. The secondary winding is connected through a rectifier circuit to a high voltage terminal for supplying a high voltage to the anode of the cathode ray tube. In addition, the fly-back transformer is provided with a tertiary winding across which a capacitor is connected to form a resonant circuit having a resonant frequency which is selected to be in the vicinity of the horizontal frequency of the input horizontal driving signal, and the waveform of a voltage obtained across the secondary winding is substantially sinusoidal. Thus, this resonant circuit serves to effect the voltage produced at the secondary winding to change its waveform to be substantially sinusoidal with its peak portion being flattened.

### SUMMARY OF THE INVENTION

An essential object of the present invention is to control the increase of the upper loss of the transformer to lower the application voltage in the reverse direction so that the apparatus may not be prevented from failing through the corona discharge or the arc discharge.

In accomplishing the above object, the power feeding apparatus of the present invention comprises power supplies such as commercial power supply, battery or the like, a power transducer fed by said power supplies and including a transformer having a primary winding and a secondary winding and at least one semi-conductor switch in a circuit with said primary winding and operable to generate a high-frequency output operating voltage over the transformer secondary winding to be supplied over a load which has unidirectional current characteristics, and is characterized by a resonance circuit coupled to the output and tuned to a resonance frequency which is an odd multiple of the frequency of said operating voltage and providing a resonance voltage, wherein said resonance circuit is coupled with the power transducer by coupling means such that the voltage waveform of the resonance circuit is superimposed on the voltage waveform of the power transducer thereby lowering the reverse voltage of the load.

Further advantageous embodiments are defined in the sub-claims.

### BRIEF DESCRIPTION OF THE DRAWINGS

These and other objects and features of the present invention will become clear from the following description taken in conjunction with the preferred embodiments thereof with reference to the accompanying drawings, in which:
Fig. 1 is a circuit diagram of the conventional power feeding apparatus (already referred to);
Fig. 2 shows waveform charts of the circuit of Fig. 1;
Fig. 3 is an operation characteristic graph of a magnetron;
Fig. 4 is a circuit diagram of a power feeding apparatus in one embodiment of the present invention;
Fig. 5 and Fig. 6 show the operation waveforms of the circuit of Fig. 4;
Fig. 7 shows a waveform chart for explaining the essential portions of the circuit of Fig. 4;
Fig. 8 and Fig. 9 are circuit diagrams showing the other embodiment of the tuning circuit means in the same circuit diagram of Fig. 4; and
Fig. 10 and Fig. 11 are cross-sectional view of the transformer for constructing the tuning circuit means of the circuit diagram of Fig. 4.

### DETAILED DESCRIPTION OF THE INVENTION

Before the description of the present invention proceeds, it is to be noted that like parts are designated by like reference numerals throughout the accompanying drawings.

As shown in Fig. 4, a commercial power supply 9 is fed into a DC power circuit 13. It is supplied into an inverter 14 which is a power transducer. The commercial power supply 9 and the DC power supply 13 form the power supply of the inverter 14. The inverter 14 is composed of a semiconductor switch (transistor) 6, a diode 7, etc. It feeds power which has been converted into a load 3 having unidirectional electrical current characteristics through the urging of a transformer 2. The load 3 is that like a magnetron, which is equivalently represented by a series connector of a diode D_{M}, a resistor R_{M}, and a zener diode Z_{DM}.

A current flowing through a transistor 6, a diode 7, the primary winding of the transformer 2, a resonance capacitor 5 respectively are provided as shown in Figs. 5(a), 5(b) and 5(c). Namely, the current I_{CE} of the transistor 6, the current of the diode 7 flow as in Fig. 5(a). And such high-frequency current I_{L} as that in Fig. 5(b) flows to the primary winding of the transformer 2. Such current I_{CI} as that in Fig. 5(c) flows to the resonance capacitor 5. These waveforms flow by the switching on, off of the transistor 6.

Namely, with the transistor 6 off (as shown in Fig. 5(a), a current which is almost the same as I_{CE} flows onto the primary side of the transformer 2 to turn off the transistor 6 after the lapse of the on time by the predetermined time. At this time, the current flowing onto the primary winding T1 of the transformer 2 oscillates between the inductance component of the transformer 2 and the capacitor 5 for resonance use to flow such oscillation currents as shown in Figs. 5(b) and 5(c) when the transistor 6 is off. After the lapse of the off time which is about one-half cycle through one cycle of the oscillation period, the transistor 6 is turned on again. The current flows into the inductance component of the primary winding T1 of the transformer 2 again and such currents as shown in Fig. 5(a) and 5(b) flow. By the repetition of the above-described operation, the oscillation continues, it is converted into the high-frequency power.

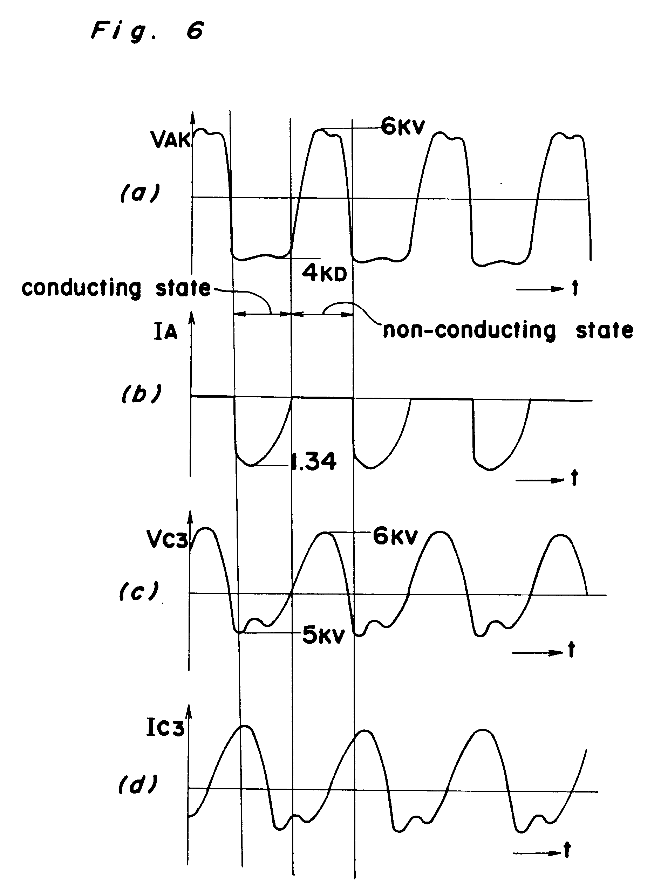

On the other hand, the waveforms of each operating voltage and current on the secondary side of the transformer 2 are shown in Fig. 6. The voltage V_{AK} of the load 3 is shown in Fig. 6(a) and the current I_{A} thereof is shown in Fig. 6(b). When the voltage has been caused in the transformer 2 in the direction along which the load conducts, the load conducts to let the current I_{A} flow as it exceeds the voltage equivalent to the zener voltage of the load 3. The voltage V_{AK} is retained at the approximate zener voltage. Generally, the voltage becomes approximately -4KV in the case of a magnetron.

When the voltage has been caused in the transformer 2 in the non-conductive condition of the load 3, the current I_{A} does not flow through the load, but flows through the capacitor CH4. The voltage V_{AK} at this time causes approximately -6 KV. In the conventional power feeding apparatus, it is about -6 KV. This may be realized by the provision of a resonance circuit means 1 shown in Fig. 4. The resonance circuit means 1 is made a constant which has resonance in the frequency higher than the operating frequency of the inverter 14. It is most effective that the resonance frequency is higher than the operating frequency of the inverter 14. In the fourth embodiment, the winding T3 is added to the transformer 2 to connect the capacitor C3 to the added winding T3 so that the resonance frequencies at the operating condition of this T3 and C3 become the higher harmonics of the operating frequency of the inverter 14. The resonance circuit means 1 is magnetically coupled through an iron core onto the secondary side of the transformer 2.

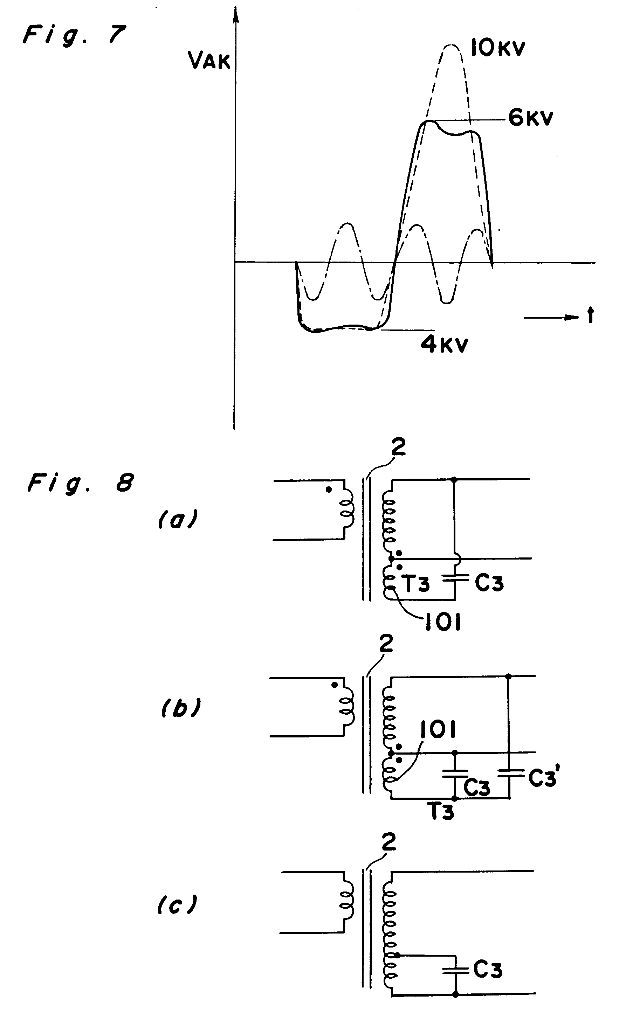

The reason why the voltage V_{AK} drops into 6 KV under the above-described construction will be described in Fig. 7. The dotted line of Fig. 7 shows the voltage waveform where the resonance circuit means 1 does not exist, with about 10 KV being caused. In Fig. 7, the solid line shows the voltage waveform where the resonance circuit means 1 of the present invention is added. The resonance frequency of the resonance circuit means 1 in this case shows the case where it has been set in the third higher harmonic of the operating frequency of the inverter 14. Accordingly, the frequency (shown in one-dot chain line) of the third higher harmonic of the resonance circuit means 1 is superimposed on the voltage waveform (shown in the dotted line) in which the conventional 10 KV was caused, so that the waveform becomes that of the low voltage shown in the solid line.

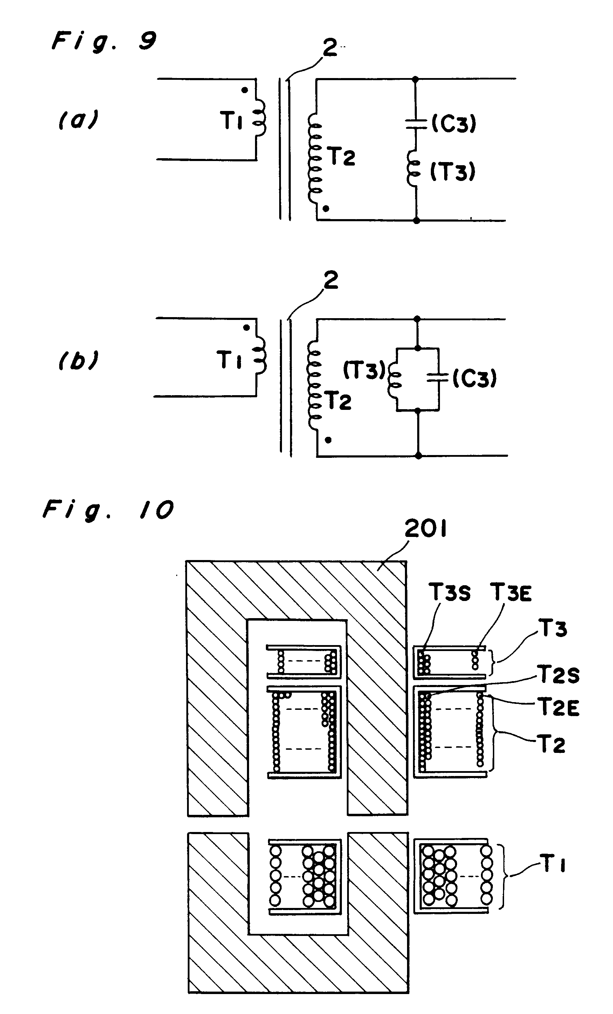

The operation and effect by the resonance means 1 as provided are described hereinabove. The realizing method may be provided in addition to the resonance circuit means shown in Fig. 4. The other embodiment of the portion surrounded by the dotted line including the resonance circuit means 1 and the transformer 2 shown in Fig. 4 is shown in Figs. 8(a) and 8(b) and 8(c), and Figs. 9(a) and 9(b). In Figs 8(a) and 8(b), the winding is added to the transformer 2, with the capacitor being connected to the winding. In Fig. 8(c), an intermediate tap is provided on the secondary winding of the transformer 2, with the capacitor being connected to the intermediate tap. In Figs. 9(a) and 9(b), the L and C are provided newly, and are connected to the load circuit.

Such a voltage V_{C3} shown in Fig. 6(c) is caused in the resonance circuit means 1 shown in Fig. 4 to flow such a current I_{C3} as shown in Fig. 6(d). In the waveform, the frequency, which is three times as many as the operating frequency of the inverter 14, and the load voltage are superimposed. The winding of the transformer 2 as shown in Fig. 4 is constructed such that the polarity of the voltage V_{C3} may become the same as that of the voltage V_{AK} of the load. Namely, the winding T2 connected to the load is connected in the respective one terminal with the winding T3 of the resonance circuit means 1 so that the polarity of the generated voltage at the other terminal of each winding may become the same. In this manner, the voltage difference between the windings T2 and T3 becomes smaller so that the withstand voltage between the windings T2 and T3 may be made smaller. The reason therefor will be described in Fig. 10 in accordance with the construction of the windings of the transformer.

A core 201, a primary winding T1, a winding for load use T2, and a winding for the resonance circuit T3 are shown in Fig. 10. The T2S portion and the T3S portion, which are closer to the respective centers of the T2 and T3, are connected with each other. The winding directions are constructed so that the polarities of the generated voltages of the terminals T2E and T3E on the outer side may become the same. In this manner, the voltage difference between the windings T2 and T3 becomes smaller, neither corona discharges nor arc discharges are provided between the windings, the smaller withstand voltage of the windings T2 and T3 will do, the space distance may be made smaller also, thus resulting in a smaller transformer. If the polarity is reverse, large voltage is caused between the T2E and the T3E to cause the corona discharge and the arc discharge for damages.

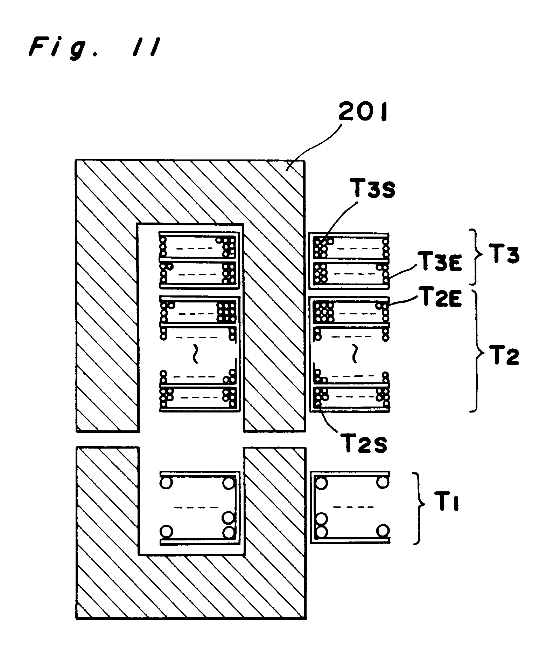

Fig. 11 shows a construction view in a case where the winding T2 for load use and the tuning circuit winding T3 are split-wound. Even in this case, the T2S is connected with the T3S. As the voltage of the same polarity is caused in the T2E and the T3E, the voltage difference between the T2E and the T3E is small, so that there is no possibility of the corona discharge and the arc discharge. The distance between the T2E and the T3E may be also made small, with the result that small-sized transformer made be made smaller. If the polarity is reverse, large voltage is caused between the T2E and the T3E to fail the transformer by the corona discharge and the arc discharge.

The reverse voltage of the load 3 may be lowered by the provision of the resonance circuit means 1. Thus, there is no possibility of corona discharge, arc discharge to be caused, so that the stable operation is provided. The insulation of wirings, electrodes, terminals, etc. is not required to be strengthened, so that the realization is easier and the cost is lower.

As is clear from the foregoing description, according to the arrangement of the present invention, the generating voltage is dropped so that the stable power may be fed without the corona discharge and the arc discharge to be caused, the insulating withstand voltage between the windings of the transformer, the pulling of the wirings, and the insulating withstand voltage may be reduced.

Furthermore, the distance between the windings of the transformer may be made smaller so that the transformer may be made smaller in size. As the insulating yield strength is smaller and the size is smaller, the lower cost may be realized.

## Claims

1. A power feeding apparatus comprising power supplies (9) such as commercial power supply, battery or the like, a power transducer (14) fed by said power supplies (9) and including a transformer (2) having a primary winding (T₁) and a secondary winding (T₂, T₃) and at least one semi-conductor switch (6) in a circuit with said primary winding (T₁) and operable to generate a high-frequency output operating voltage over the transformer secondary winding (T₂) to be supplied to a load (3) which has unidirectional current characteristics,
characterized by a resonance circuit (1) coupled to the output and tuned to a resonance frequency which is an odd multiple of the frequency of said operating voltage and providing a resonance voltage, wherein said resonance circuit (1) is coupled with the power transducer (14) by coupling means such that the voltage waveform of the resonance circuit (1) is superimposed on the voltage waveform of the power transducer (14) thereby lowering the reverse voltage of the load (3).

2. A power feeding apparatus in accordance with Claim 1, wherein the resonance frequency of the resonance circuit (1) is made substantially the same as the third harmonic of the operating frequency of the power transducer (14).

3. A power feeding apparatus in accordance with Claim 1, wherein the resonance circuit (1) is arranged to be connected onto the load side of the transformer (2).

4. A power feeding apparatus in accordance with Claim 1, wherein the resonance circuit (1) is arranged to be connected by the magnetic coupling of the transformer (2).

5. A power feeding apparatus in accordance with Claim 4, wherein the resonance circuit (1) is arranged to be connected by the provision of a winding (T3) in the transformer (2).

6. A power feeding apparatus in accordance with Claim 5, wherein the resonance circuit (1) is arranged to have a capacitive load (C3) connected with the winding (T3) provided in the transformer (2).

7. A power feeding apparatus in accordance with Claims 5 or 6, characterized in that one terminal of the winding (T3) of the resonance circuit (1) is connected with one terminal of the secondary winding (T2) connected with the load (3), wherein the respective voltages generated at the other terminal of the winding (T3) of the resonance circuit (1) and the other terminal of the secondary winding (T2) have the same polarity.

## Patentansprüche

1. Energieversorgungsgerät mit Energieversorgungen (9) wie einer kommerziellen Spannungsversorgung, Batterie o.dgl., einem Energiewandler (14), der von den Energieversorgungen (9) versorgt wird und einen Tranformator (2) mit einer Primärwicklung (T₁) und einer Sekundärwicklung (T₂, T₃) und mindestens einen Halbleiterschalter (6) in einem Schaltkreis mit der Primärwicklung (T₁) enthält und eine hochfrequente Ausgangsbetriebsspannung über der Transformatorsekundärwicklung (T₂) erzeugt, welche an eine Last (3) zu übertragen ist, die unidirektionale Stromeigenschaften besitzt,
gekennzeichnet durch eine Resonanzschaltung (1), die am Ausgang angeschlossen und auf eine Resonanzfrequenz abgestimmt ist, die ein ungradzahliges Vielfaches der Frequenz der Betriebsspannung beträgt, und eine Resonanzspannung erzeugt, wobei die Resonanzschaltung (1) mit dem Spannungswandler (14) gekoppelt ist durch Kopplungsmittel, so daß die Wellenform der Spannung der Resonanzschaltung (1) der Wellenform der Spannung des Energiewandlers (14) überlagert ist, wodurch die Sperrspannung der Last (3) herabgesetzt wird.

2. Energieversorgungsgerät nach Anspruch 1, bei welchem die Resonanzfrequenz der Resonanzschaltung (1) im wesentlichen gleich der dritten Harmonischen der Betriebsfrequenz des Energiewandlers (14) beträgt.

3. Energieversorgungsgerät nach Anspruch 1, bei welchem die Resonanzschaltung (1) so angeordnet ist, daß sie an der Lastseite des Transformators (2) angeschlossen ist.

4. Energieversorgungsgerät nach Anspruch 1, bei welchem die Resonanzschaltung (1) so angeordnet ist, daß sie durch magnetische Kopplung des Transformators (2) angeschlossen ist.

5. Energieversorgungsgerät nach Anspruch 4, bei welchem die Resonanzschaltung (1) so angeordnet ist, daß sie durch Bildung einer Wicklung (T₃) im Transformator (2) angeschlossen ist.

6. Energieversorgungsgerät nach Anspruch 5, bei welchem die Resonanzschaltung (1) so angeordnet ist, daß sie eine kapazitive Last (C₃) besitzt, die mit der im Transformator (2) gebildeten Wicklung (T₃) gekoppelt ist.

7. Energieversorgungsgerät nach den Ansprüchen 5 oder 6,
dadurch gekennzeichnet, daß ein Anschluß der Wicklung (T₃) der Resonanzschaltung (1) mit einem Anschluß der an die Last (3) angeschlossenen Sekundärwicklung (T₂) gekoppelt ist, wobei die entsprechenden Spannungen, die am anderen Anschluß der Wicklung (T₃) der Resonanzschaltung (1) und am anderen Anschluß der Sekundärwicklung (T₂) erzeugt werden, dieselbe Polarität besitzen.

## Revendications

1. Appareil d'alimentation en énergie, comprenant une alimentation (9) telle qu'un réseau d'alimentation, une batterie d'accumulateurs ou analogue, un transducteur (14) d'énergie alimenté par l'alimentation (9) et comprenant un transformateur (2) ayant un primaire (T₁) et un secondaire (T₂, T₃) et au moins un commutateur à semi-conducteur (6) monté dans un circuit avec le primaire (T₁) et destiné à provoquer la création d'une tension de fonctionnement de sortie à haute fréquence aux bornes du secondaire (T₂) du transformateur afin qu'elle parvienne à une charge (3) qui a des caractéristiques de circulation unidirectionnelle de courant, caractérisé par un circuit résonnant (1) couplé à la sortie et accordé à une fréquence de résonance qui est un multiple impair de la fréquence de la tension de fonctionnement et donnant une tension de résonance, et dans lequel le circuit résonnant (1) est couplé au transducteur (14) d'énergie par un dispositif de couplage de manière que la forme d'onde de tension du circuit résonnant (1) se superpose à la forme d'onde de tension du transducteur d'énergie (14) et abaisse ainsi la tension inverse de la charge (3).

2. Appareil d'alimentation en énergie selon la revendication 1, dans lequel la fréquence de résonance du circuit résonnant (1) est rendue pratiquement égale au troisième harmonique de la fréquence de fonctionnement du transducteur d'énergie (14).

3. Appareil d'alimentation en énergie selon la revendication 1, dans lequel le circuit résonnant (1) est destiné à être connecté du côté du transformateur (2) tourné vers la charge.

4. Appareil d'alimentation en énergie selon la revendication 1, dans lequel le circuit résonnant (1) est destiné à être connecté par le couplage magnétique du transformateur (2).

5. Appareil d'alimentation en énergie selon la revendication 4, dans lequel le circuit (1) est destiné à être connecté par un enroulement (T₃) du transformateur (2).

6. Appareil d'alimentation en énergie selon la revendication 5, dans lequel le circuit résonnant (1) est destiné à posséder une charge capacitive (C₃) connectée à l'enroulement (T₃) incorporé au transformateur (2).

7. Appareil d'alimentation en énergie selon la revendication 5 ou 6, caractérisé en ce qu'une première borne de l'enroulement (T₃) du circuit résonnant (1) est connectée à une première borne du secondaire (T₂) qui est connectée à la charge (3) et les tensions respectives créées à l'autre borne de l'enroulement (T₃) du circuit résonnant (1) et à l'autre borne du secondaire (T₂) ont la même polarité.
